# EUROPÄISCHE PATENTSCHRIFT

(11) **EP 1 436 172 B1**
(45) Veröffentlichungstag und Bekanntmachung des Hinweises auf die Patenterteilung: **01.03.2006**
(21) Anmeldenummer: 02772052.3
(22) Anmeldetag: 11.09.2002
(51) Int. Cl.: B60R 21/01

(54) **VERFAHREN ZUR BESTIMMUNG EINER AUSLÖSEENTSCHEIDUNG FÜR RÜCKHALTEMITTEL IN EINEM FAHRZEUG**
METHOD FOR DETERMINING A DECISION FOR THE TRIGGERING OF RESTRAINT MEANS IN A VEHICLE
PROCEDE POUR DETERMINER LORSQUE LE SEUIL DE DECLENCHEMENT D'UN SYSTEME DE RETENUE EST ATTEINT DANS UN VEHICULE

(30) Priorität: 05.10.2001 DE 10149112
(43) Veröffentlichungstag der Anmeldung: 14.07.2004
(73) Patentinhaber: ROBERT BOSCH GMBH, 70442 Stuttgart (DE)
(72) Erfinder: ROELLEKE, Michael, 71229 Leonberg-Hoefingen (DE)
(86) Internationale Anmeldenummer: PCT/DE2002/003378
(87) Internationale Veröffentlichungsnummer: WO 2003/031236

(56) Entgegenhaltungen:
- DE-A- 19 708 508
- DE-A- 19 811 865
- DE-A- 19 910 596
- JP-A- 2001 071 844

## Beschreibung

### Stand der Technik

Die Erfindung geht aus von einem Verfahren zur Bestimmung einer Auslöseentscheidung von Rückhaltemitteln nach der Gattung des unabhängigen Patentanspruchs.

Aus der Offenlegungsschrift DE 199 10 596 A1 ist es bereits bekannt, Rückhaltemittel in Abhängigkeit von Fahrzeugdynamikdaten auszulösen. Dabei können insbesondere solche Daten von einem ESP-System verwendet werden.

### Vorteile der Erfindung

Das erfindungsgemäße Verfahren zur Bestimmung einer Auslöseentscheidung für Rückhaltemittel in einem Fahrzeug mit den Merkmalen des unabhängigen Patentanspruchs hat demgegenüber den Vorteil, dass durch eine einfache Verknüpfung von Schwellwertenvergleichen für den Schwimmwinkel in Verbindung mit der Fahrzeugeigengeschwindigkeit in Fahrtrichtung und einem Fahrzeugkippwinkel die Auslöseentscheidung bestimmt werden kann. Dies führt insgesamt zu einer rechtzeitigen Auslöseentscheidung bei sogenannten Soil-Trip-Rollover-Vorgängen.

Durch die in den abhängigen Ansprüchen aufgeführten Maßnahmen und Weiterbildungen sind vorteilhafte Verbesserungen des im unabhängigen Patentanspruch angegebenen Verfahrens zur Bestimmung einer Auslöseentscheidung für Rückhaltemittel in einem Fahrzeug möglich.

Besonders vorteilhaft ist, dass die Fahrzeugkippbewegung durch eine Fahrzeugquerbeschleunigung und/oder eine Fahrzeugquergeschwindigkeit charakterisiert wird und damit durch Schwellwertvergleiche dieser beiden Parameter ein Kippvorgang vorhergesagt werden kann. Die Überwachung der Fahrzeugquerbeschleunigung erfolgt auf Werte, die oberhalb der durch Reifenstraßenkontakt möglichen Kräfte liegen. Erst ab diesen Verzögerungen kann von einem erwarteten Überschlag ausgegangen werden. Typische Werte für diese Haftreibung liegen im Bereich bis ca. 1,2 g. Bei höheren Beschleunigungen muss von einem äußeren Abbremsvorgang ausgegangen werden, der von seitlichen Wankbewegungen des Fahrzeugs begleitet ist. Durch Querzugversuche von Fahrzeugen werden die typischen Verläufe für solche Vorgänge an weichen und harten Kanten ermittelt.

Weiterhin ist es von Vorteil, dass ein Signal von einer Insassenerkennung bestimmt, ob es zu einer Auslöseentscheidung kommt. Für Rückhaltemittel, die gar keine Person schützen, muss auch kein Rückhaltemittel ausgelöst werden. Weiterhin ist bei solchen Personen wie Kindern und kleinen beziehungsweise leichten Personen eine Auslösung von Rückhaltemitteln mit erhöhten Gefahren verbunden. Auch hier dürfen nicht alle Rückhaltemittel ausgelöst werden, da die Auslösung der Rückhaltemittel unter Umständen zu Verletzungen der zu schützenden Personen führen kann.

Der Schwimmwinkel wird hier vorzugsweise mit einem Schwellwert von 30° verglichen, denn oberhalb dieses Winkels kann es zu einem Fahrzeugüberschlag kommen. Zur Auswertung der Historie oder zur Erkennung des Schleudervorgangs wird die Drehbewegung um die Fahrzeughochachse ω_{z} und die Lenkbewegung benötigt. Aus diesen beiden Größen kann wie bekannt der Schwimmwinkel des Fahrzeugs berechnet werden. Dabei ist hier eine exakte Berechnung nicht notwendig, es reicht bereits eine Genauigkeit in Fünf-Grad-Schritten. Da Schleudervorgänge bis zu fünf oder zehn Sekunden dauern können ist es wichtig, dass die Schleuderfunktion sehr robust die Lage des Schwimmwinkels bestimmt.

Weiterhin ist es von Vorteil, dass die Fahrzeugquerbeschleunigung mit einem Schwellwert von 1,2g verglichen wird, da ab diesem Wert, wie oben dargestellt, von einem äußeren Abbremsvorgang ausgegangen werden muss, der auf einen Überschlag hindeutet. Das seitliche Kippen kann dabei beispielweise durch einen Eingrabvorgang der Räder oder an einer Kante erfolgen.

Die Fahrzeugquergeschwindigkeit, die aus der Fahrzeugeigengeschwindigkeit in Fahrtrichtung mittels Schwimmwinkel berechnet wird, wird mit einer kritischen Quergeschwindigkeit von 5km/h verglichen, ab der das Fahrzeug beim Anschlagen an eine feste Kante kippen wird. Diese Geschwindigkeit wird bei Eingrabvorgängen in Erde oder Sand geringfügig höherliegen, da die Räder durch das Eingraben die Kante selbst aufschieben müssen. Der Grenzwert für diese kritische Quergeschwindigkeit muss gegebenenfalls entsprechend angepasst werden.

Weiterhin ist es von Vorteil, dass eine Vorrichtung vorliegt, die entsprechende Mittel zur Bestimmung des Schwimmwinkels und der Fahrzeugkippbewegung aufweist, und auch Mittel zur Bestimmung der Auslöseentscheidung aus dem Schwimmwinkel und der Fahrzeugkippbewegung.

### Zeichnung

Ausführungsbeispiele der Erfindung werden in den Zeichnungen dargestellt und in der nachfolgenden Beschreibung näher erläutert. Es zeigen
Figur 1 ein Blockschaltbild der erfindungsgemäßen Vorrichtung,
Figur 2 ein erstes Blockdiagramm des erfindungsgemäßen Verfahrens,
Figur 3 ein zweites Blockdiagramm des erfindungsgemäßen Verfahrens,
Figur 4 ein Flussdiagramm des erfindungsgemäßen Verfahrens und
Figur 5 ein Schwimmwinkel-Quergeschwindigkeitsdiagramm, das ein Schwellenfenster zeigt..

### Beschreibung der Ausführungsbeispiele

Überrollvorgänge bei Fahrzeugen können im allgemeinen mit dem physikalischen Prinzip der Umwandlung von Rotationsenergie in potentielle Energie sensiert werden. Mit diesem Prinzip ist es möglich, schon bei relativ kleinen Drehwinkeln des Fahrzeugs mit Hilfes eines Drehratensensors eine Prädiktion des Überschlages vorzunehmen. Die typischen Winkel liegen im Bereich zwischen 25° und dem statischen Kippwinkel, also ungefähr 55°. Bei bestimmten Fahrmanövern, die Soil-Tripp-Rollover genannt werden, kommt es durch eine seitliche Bewegung des Fahrzeugs aufgrund von Schleudervorgängen mit anschließender Verzögerung, durch zum Beispiel das Eingraben der Räder in Erde oder den Kontakt der Räder mit einer Randsteinkante, zu einem seitlichen Kippen. Die Insassenbewegung, die durch die Querverzögerung erfolgt, sorgt sehr schnell für eine seitliche Verlagerung des Oberkörpers und Kopfes bis zum Anschlag an die Seitenscheibe. In dieser Position ist dann eine Aktivierung des zum Schutz vorhandenen Kopfairbags, der sich aus dem Dach heraus nach unten entfaltet und sich zwischen die Seitenscheibe und den Insassen legen soll, nicht mehr möglich. Zur korrekten Aktivierung des Kopfairbags muss eine Erkennung schon unterhalb eines Fahrzeugkippwinkels von 10° erfolgen.

Erfindungsgemäß wird daher ein Verfahren zur Bestimmung der Auslösezeit für Rückhaltemittel in einem Fahrzeug verwendet, das durch die Historie der Fahrzeugbewegung direkt vor dem Überschlag eine Aussage zur Prädiktion des Überschlages ermöglicht. Eine Grundlage dazu ist die Berechnung der kritischen Quergeschwindigkeit (critical sliding velocity = csv) eines Fahrzeugs, die angibt, ab welcher Geschwindigkeit ein Fahrzeug seitlich kippen wird, wenn an den Reifen eine Querverzögerung auftritt. Diese Querverzögerung kann beispielweise durch einen Eingrabvorgang der Räder oder an einer Kante erfolgen.

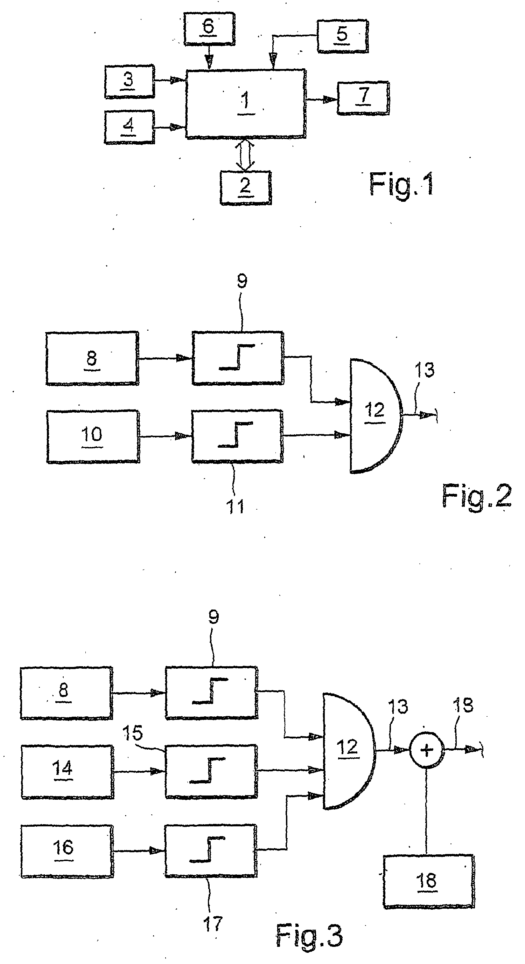

Figur 1 zeigt als Blockschaltbild die erfindungsgemäße Vorrichtung. Ein Prozessor 1, der in einem Steuergerät für die Rückhaltemittel angeordnet ist, ist über einen Datenein-/-ausgang mit einem Speicher 2 verbunden, in dem Schwellwerte abgelegt sind, die zum Vergleich mit gemessenen Sensordaten dienen. Sensordaten kommen von Beschleunigungssensoren 3, Drehratensensoren 4, einem ESP 5 und von einer Insassenerkennung 6. All diese Sensoren sind über Dateneingänge an den Prozessor 1 jeweils angeschlossen. Die einzelnen Sensoren 3 bis 6 weisen eine eigene Elektronik zur Verstärkung und Digitalisierung der Messwerte auf. Die Beschleunigungssensoren 3 und auch der Drehratensensor 4 können in einem Steuergerät mit dem Prozessor 1 und dem Speicher 2 angeordnet sein oder auch ausgelagert außerhalb des Steuergeräts sein.

Liegen ausgelagerte Sensoren vor, dann kann die Verbindung zu dem Prozessor 1 über Zwei-Drahtleitungen erfolgen oder über einen Bus. Das ESP 5 weist einen eigenen Rechner auf, der Daten aus Sensorwerten berechnet. Beschleunigungssensoren 3 und die Drehratensensoren 4 können auch mit dem ESP 5 verbunden sein, um Sensoreninput für die ESP-Berechnung zu liefern. Über einen Datenausgang ist der Prozessor 1 mit Rückhaltemitteln 7, also Airbags und/oder Gurtstrammer, verbunden. Die Rückhaltemittel 7 werden in Abhängigkeit von Auslösefällen ausgelöst, wobei nur die Rückhaltemittel ausgelöst werden, die auch Insassen schützen. D.h. unbesetzte Plätze oder durch Airbags nicht schützbare Personen erfahren keinen Schutz durch ausgelöste Rückhaltemittel.

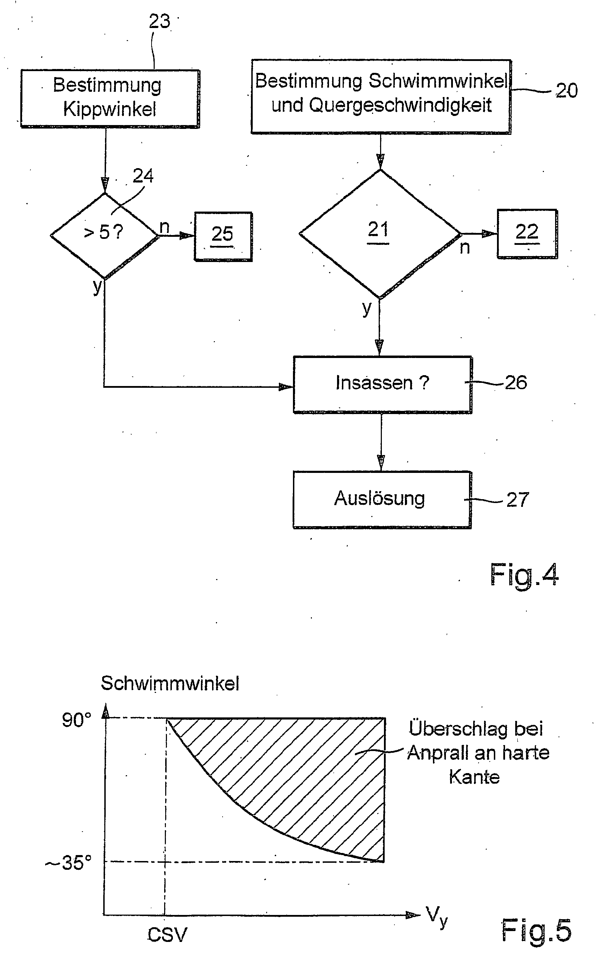

Figur 2 zeigt als ein erstes Blockdiagramm den Ablauf des erfindungsgemäßen Verfahrens, der im Prozessor 1 anhand der Sensorwerte und der abgespeicherten Schwellwerte abläuft. Im Block 8 werden die Drehrate um die Fahrzeughochachse und die Lenkbewegungen, die vom ESP 5 bereitgestellt werden, verwendet, um den Schwimmwinkel zu berechnen, der den Winkel zwischen der Fahrrichtung des Fahrzeugs, also dem Vektor der Geschwindigkeit, und der Fahrzeuglängsachse angibt. Dieser Schwimmwinkel wird mit der Fahrzeugeigengeschwindigkeit in Fahrtrichtung vₓ verknüpft, um die Querkomponente v_{y} zu schätzen (v_{y} = vₓ cos(Schwimmwinkel)). Diese Querkomponente v_{y} wird mit dem Schwimmwinkel kombiniert und über ein Schwellenfenster f(v_{y}, Schwimmwinkel) verglichen. Wird die Schwelle überschritten, so ist ein Überschlag bei einem Anprall an eine Kante unausweichlich. Dies wird in Fig. 5 gezeigt. Hier wird an der Abzisse die Quergeschwindigkeit und an der Ordinate der Betrag des Schwimmwinkels abgetragen. Der grau schraffierte Bereich kennzeichnet den Bereich, in dem ein Überschlag bei einem Anprall mit der Fahrzeugseite an einer harten Kante unausweichlich ist. Er beginnt bei einem Schwimmwinkel von rund 35° und führt bei zunehmend niedrigeren Geschwindigkeit bis zu einem Schwimmwinkel von 90°. Daher führt der schraffierte Bereich zu einer logischen Eins.

Im Block 9 wird demnach dieser Schwimmwinkel und die Quergeschwindigkeit einer Schwellwertentscheidung entsprechend Fig. 5 unterzogen. Der Ausgang des Blocks 9 führt an einen ersten Eingang eines UND-Gatters 12. Im Block 10 wird der Kippwinkel des Fahrzeuges berechnet. Der Kippwinkel wird in Block 11 ebenfalls einem Schwellwertvergleich unterzogen, wobei hier ein Kippwinkel von 5° als Schwellwert verwendet wird. Liegt der Kippwinkel über dem Schwellwert, dann liegt auch am Ausgang des Blockes 11 eine logische Eins an. Der Ausgang des Blockes 11 führt zu einem zweiten Eingang des UND-Gatters 12. Damit werden die Ausgangssignale der Blöcke 9 und 11 einer logischen UND-Verknüpfung unterzogen, so dass dann nur eine logische Eins am Ausgang 13 des UND-Gatters 12 anliegt, wenn beide Schwellwertvergleicher 9 und 11 ein Überschreiten des Schwellwertes anzeigen.

Figur 3 zeigt ein zweites Blockdiagramm des erfindungsgemäßen Verfahrens. Für die Blöcke 8 und 9 gilt das oben Gesagte. Der Kippwinkel wird nun anhand zweier Parameter indirekt angegeben, indem diese beiden Parameter jeweils einem eigenen Schwellwertvergleich unterzogen werden. Im Block 14 wird die Querbeschleunigung, also in der Fahrzeugquerrichtung, vom Beschleunigungssensor 3 bereitgestellt. Der Prozessor 1 führt dann im Schwellwertvergleicher 15 einen Vergleich für diese Querbeschleunigung durch. Der Schwellwert wird hier mit 1,2G angegeben, und nur wenn dieser Schwellwert von der Querbeschleunigung überschritten wird, liegt am Ausgang des Schwellwertvergleichers 15 eine logische Eins an. In Block 16 wird die Quergeschwindigkeit, die während des Kippvorgangs ermittelt wird, des Fahrzeugs durch den Prozessor 1 bereitgestellt. Diese Fahrzeugquergeschwindigkeit kann entweder aus Beschleunigungssignalen oder mittels eines Geschwindigkeitssensors ermittelt werden. Diese Geschwindigkeit wird ebenfalls im Block 17 dann einem Schwellwertvergleich unterzogen. Liegt diese Geschwindigkeit über einer kritischen Geschwindigkeit, die hier mit 5km/h angegeben wird, dann liegt am Ausgang des Schwellwertvergleichers 17 eine logisch Eins an. Die Ausgänge der Schwellwertvergleicher 9, 15 und 17 sind die Eingänge des UND-Gatters 12. Nur wenn alle Schwellwertvergleicher eine logische Eins anzeigen, also wenn alle Schwellwerte durch die Messwerte übertroffen werden, dann liegt am Ausgang 13 des UND-Gatters 12 eine logische Eins an. Diese logische Eins wird dann weiterhin UND-verknüpft mit einem Signal vom Insassenerkennungssystem 6, das im Block 18 bereitgestellt wird. Zeigt dieses Signal an, dass nur bestimmte Plätze besetzt sind, dann werden auch nur für diese Plätze die Rückhaltemittel 7 ausgelöst. Dies liegt dann als Signal am Ausgang 19 vor.

In Figur 4 ist als ein Flussdiagramm das erfindungsgemäße Verfahren zur Bestimmung einer Auslösezeit für Rückhaltemittel in einem Fahrzeug angegeben. Im Verfahrensschritt 20 wird der Schwimmwinkel und die Quergeschwindigkeit wie oben angegeben bestimmt. Im Verfahrensschritt 21 wird dieses Wertepaar mit dem Schwellwert aus Fig. 5 verglichen. Liegt das Wertepaar unter diesem Schwellwert, dann wird im Verfahrensschritt 22 dieses Verfahren beendet. Ist jedoch das Wertepaaer über diesem Schwellwert, wird zu Verfahrensschritt 26 gesprungen. Im Verfahrensschritt 23 wird der Kippwinkel bestimmt, wie oben angegeben beispielweise anhand der Querbeschleunigung. Im Verfahrensschritt 24 wird dieser Kippwinkel mit einem Schwellwert verglichen. Liegt der Kippwinkel unter diesem Schwellwert, dann wird im Verfahrensschritt 25 das Verfahren beendet. Liegt jedoch der Kippwinkel über diesem Schwellwert, dann wird ebenfalls zu Verfahrensschritt 26 gesprungen. Nur wenn beide Bedingungen erfüllt sind, wird im Verfahrensschritt 26 überprüft, welche Insassen im Fahrzeug vorhanden sind und damit mit Rückhaltemitteln zu schützen sind. Im Verfahrensschritt 27 erfolgt dann die entsprechende Auslösung der Rückhaltemittel 7 für die Insassen, die vorhanden sind.

## Patentansprüche

1. Verfahren zur Bestimmung einer Auslöseentscheidung für Rückhaltemittel (7) in einem Fahrzeug, wobei die Auslöseentscheidung in Abhängigkeit von Fahrdynamikdaten bestimmt wird, **dadurch gekennzeichnet, dass** als die Fahrdynamikdaten ein Schwimmwinkel in Verbindung mit einer Quergeschwindigkeit des Fahrzeugs und eine Fahrzeugkippbewegung jeweils mit wenigstens einem Schwellwert verglichen werden und dass dann in Abhängigkeit von den Schwellwertvergleichen (9, 11, 15, 17) die Auslöseentscheidung erfolgt.

2. Verfahren nach Anspruch 1, **dadurch gekennzeichnet, dass** die Fahrzeugkippbewegung durch eine Fahrzeugquerbeschleunigung und durch eine Fahrzeugquergeschwindigkeit bestimmt wird.

3. Verfahren nach Anspruch 1 oder 2, **dadurch gekennzeichnet, dass** die Auslöseentscheidung zusätzlich in Abhängigkeit von einem Signal von einer Insassenerkennung (6) bestimmt wird.

4. Verfahren nach Anspruch 1, **dadurch gekennzeichnet, dass** der Schwimmwinkel in Fünf-Grad-Schritten bestimmt wird.

5. Verfahren nach Anspruch 2, **dadurch gekennzeichnet, dass** die Fahrzeugquerbeschleunigung mit einem Schwellwert von 1,2G verglichen wird.

6. Verfahren nach Anspruch 2, **dadurch gekennzeichnet, dass** die Fahrzeugquergeschwindigkeit mit einem Schwellwert von 5km/h verglichen wird.

7. Vorrichtung zur Durchführung des Verfahrens nach einem der Ansprüche 1 bis 6, **dadurch gekennzeichnet, dass** die Vorrichtung Mittel (3, 4, 5) zur Bestimmung des Schwimmwinkels, der Fahrzeugquergeschwindigkeit und der Fahrzeugkippbewegung und Mittel (1, 2) zur Bestimmung der Auslöseentscheidung in Abhängigkeit von dem Schwimmwinkel, der Fahrzeugquergeschwindigkeit und der Fahrzeugkippbewegung aufweist.

## Claims

1. Method for determining a triggering decision for restraint means (7) in a vehicle, the triggering decision being determined as a function of vehicle movement dynamics data, **characterized in that** an attitude angle in conjunction with a transverse velocity of the vehicle and a vehicle tilting movement as the vehicle movement dynamics data are respectively compared with at least one threshold value, and **in that** the triggering decision is then made as a function of the threshold value comparisons (9, 11, 15, 17).

2. Method according to Claim 1, **characterized in that** the vehicle tilting movement is determined by means of a vehicle transverse acceleration and by means of a vehicle transverse velocity.

3. Method according to Claim 1 or 2, **characterized in that** the triggering decision is additionally determined as a function of a signal from a vehicle occupant detector (6).

4. Method according to Claim 1, **characterized in that** the attitude angle is determined in five degree steps.

5. Method according to Claim 2, **characterized in that** the vehicle transverse acceleration is compared with a threshold value of 1.2G.

6. Method according to Claim 2, **characterized in that** the vehicle transverse velocity is compared with a threshold value of 5 km/h.

7. Device for carrying out the method according to one of Claims 1 to 6, **characterized in that** the device has means (3, 4, 5) for determining the attitude angle, the vehicle transverse velocity and the vehicle tilting movement and means (1, 2) for determining the triggering decision as a function of the attitude angle, the vehicle transverse velocity and the vehicle tilting movement.

## Revendications

1. Procédé de détermination d'une décision de déclenchement d'un moyen de retenue (7) dans un véhicule, la décision de déclenchement étant déterminée en fonction de données dynamiques de déplacement,
**caractérisé en ce que**
concernant les données dynamiques de déplacement, un angle de dérapage en liaison avec une vitesse transversale du véhicule et un mouvement de basculement du véhicule sont à chaque fois comparés à au moins un seuil, et
la décision de déclenchement s'effectue alors en fonction de la comparaison au seuil (9, 11, 15, 17).

2. Procédé selon la revendication 1,
**caractérisé en ce que**
le mouvement de basculement du véhicule est déterminé par une accélération transversale du véhicule et par une vitesse transversale du véhicule.

3. Procédé selon la revendication 1 ou 2,
**caractérisé en ce que**
la décision de déclenchement est en outre déterminée en fonction d'un signal émis par une détection d'occupants (6).

4. Procédé selon la revendication 1,
**caractérisé en ce que**
l'angle de dérapage est déterminé dans des étapes à cinq degrés.

5. Procédé selon la revendication 2,
**caractérisé en ce que**
l'accélération transversale du véhicule est comparée à un seuil de 1,2 G.

6. Procédé selon la revendication 2,
**caractérisé en ce que**
la vitesse transversale du véhicule est comparée à un seuil de 5 km/h.

7. Dispositif pour mettre en oeuvre le procédé selon l'une des revendications 1 à 6,
**caractérisé en ce que**
le dispositif présente des moyens (3, 4, 5) de détermination de l'angle de dérapage, de la vitesse transversale du véhicule et du mouvement de basculement du véhicule et des moyens (1, 2) de détermination de la décision de déclenchement en fonction de l'angle de dérapage, de la vitesse transversale du véhicule et du mouvement de basculement du véhicule.
